# EUROPEAN PATENT SPECIFICATION

(11) **EP 4 097 929 B1**
(45) Date of publication and mention of the grant of the patent: **27.08.2025**
(21) Application number: 20703403.4
(22) Date of filing: 29.01.2020
(51) Int. Cl.: H04W 72/0446, H04W 28/02

(54) **COMMUNICATION CONTROL MECHANISM USING FULL DUPLEX COMMUNICATION CONNECTION**
KOMMUNIKATIONSSTEUERUNGSMECHANISMUS MIT VOLLDUPLEX-KOMMUNIKATIONSVERBINDUNG
MÉCANISME DE COMMANDE DE COMMUNICATION À L'AIDE D'UNE CONNEXION DE COMMUNICATION EN DUPLEX INTÉGRAL

(43) Date of publication of application: 07.12.2022
(73) Proprietor: Nokia Technologies Oy, 02610 Espoo (FI)
(72) Inventor: YU, Ling, 02700 Kauniainen (FI); VAN PHAN, Vinh, 90100 Oulu (FI); LI, Zexian, 02610 Espoo (FI)
(74) Representative: Mudge, Kevin
(86) International application number: PCT/EP2020/052136
(87) International publication number: WO 2021/151481

(56) References cited:
- EP-A1- 1 670 277
- JP-A- 2019 193 226

## Description

### BACKGROUND

### Field

Examples of embodiments relate to apparatuses, methods, systems, computer programs, computer program products and (non-transitory) computer-readable media usable for conducting a communication control using a full duplex communication connection, and in particular to apparatuses, methods, systems, computer programs, computer program products and (non-transitory) computer-readable media usable for a communication control mechanism allowing flexible uplink and downlink communication by a communication element or function, such as a user equipment, using a full duplex carrier.

Patent publication EP1670277A1 describes a system and a method for mode switching and frequency band switching in a cellular system. Patent publication JP2019193226A describes a full-duplex communication system.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

The following meanings for the abbreviations used in this specification apply:
- 3GPP: 3^{rd} Generation Partnership Project
- 4G: fourth generation
- 5G: fifth generation
- BS: base station
- CE: control element
- CG: configured grant
- CN: core network
- CPU: central processing unit
- CSI: channel state information
- DCI: downlink control information
- DL: downlink
- eNB: evolved node B
- ETSI: European Telecommunications Standards Institute
- FD: full duplex
- gNB: next generation node B
- HARQ: hybrid automatic repeat request
- HO: half duplex
- LTE: Long Term Evolution
- LTE-A: LTE Advanced
- MAC: medium access control
- MCS: modulation and coding scheme
- NACK: no-acknowledgement
- NF: network function
- NR: new radio
- NW: network
- PDCCH: physical downlink control channel
- QoS: quality of service
- RAN: radio access network
- RAT: radio access technology
- RRC: radio resource control
- SPS: semi-persistent scheduling
- TDD: time division duplex
- UCI: uplink control information
- UE: user equipment
- UL: uplink
- UMTS: universal mobile telecommunication system
- URLLC: ultra reliable low latency communication

### SUMMARY

The solution is specified in the independent claims.

### BRIEF DESCRIPTION OF THE DRAWINGS

Some embodiments of the present disclosure are described below, by way of example only, with reference to the accompanying drawings, in which:
Fig. 1 shows a diagram illustrating an example of a communication network scenario in which a communication control mechanism according to some examples of embodiments in implemented;
Fig. 2 shows a signaling diagram illustrating a communication control mechanism according to some examples of embodiments in implemented;
Fig. 3 shows a flow chart illustrating a processing conducted by a communication network control element or function according to some examples of embodiments;
Fig. 4 shows a flow chart illustrating a processing conducted by a communication element or function according to some examples of embodiments;
Fig. 5 shows a diagram of a network element or function representing a communication network control element or function according to some examples of embodiments; and
Fig. 6 shows a diagram of a network element or function representing a communication element or function according to some examples of embodiments.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

Basically, for properly establishing and handling a communication between two or more end points (e.g. communication stations or elements or functions, such as terminal devices, user equipments (UEs), or other communication network elements, a database, a server, host etc.), one or more network elements or functions (e.g. virtualized network functions), such as communication network control elements or functions, for example access network elements like access points, radio base stations (BS), relay stations, eNBs, gNBs etc., and core network elements or functions, for example control nodes, support nodes, service nodes, gateways, user plane functions, access and mobility functions etc., may be involved, which may belong to one communication network system or different communication network systems.

In the cellular radio access network such as 3GPP New Radio (NR) or LTE, the base station (BS) takes a centralized management role to allocate or schedule the radio resources among the UEs connected to it for both UL and DL communication. In order to have more efficient radio resource utilization, the BS may also assign the modulation and coding scheme (MCS) adaptively according to the condition of the channels between UE and BS, which is also referred as link adaption (LA). LA denotes the matching of the modulation, coding and other signal and protocol parameters to the conditions on the communication path, e.g. the radio link (for example, pathloss, interference from other sources transmitter power etc. are considered). This requires channel state information at the transmitter side, which is acquired e.g. by measurements at the transmitter and/or receiver side which is then fed back to the transmitter.

For example, the BS performs LA based on a channel state information (CSI) report obtained from the UE for DL and sounding reference signals (SRS) received from the UE for UL.

However, delayed CSI or sounding signal e.g. due to infrequent CSI/sounding signal transmission for reducing the signalling overhead may impact the LA performance. Therefore, allocated resources and an MCS selected by the BS for UL and/or DL communication may not be always suitable for ensuring that the BS/UE correctly receives the scheduled UL/DL communication.

New communication systems, such as 5G, offers new applications which requires high communication quality. For example, in applications using real-time multimedia contents, e.g. in connected with augmented reality, there is a need for an efficient support wherein an end-user device (e.g. a UE) constantly receives real-time multimedia contents in DL and transmits critical multimedia feedbacks with unpredictable traffic patterns in UL.

In order to deal with this situation, it is conceivable over-allocate the UE with multiple UL grants so as to cope with unpredictable traffic patterns of UL critical traffic. However, this results in a waste of resources or considerable costs.

Communication modes using full or flexible duplex (FD) has been recognized as an efficient way to reduce latency e.g. in TDD. In FD, both parties of a connection are able to communicate with each other simultaneously (i.e. both ends of a connection path can send and receive simultaneously). On the other hand, half duplex (HD) means that both parties can communicate with each other, but not simultaneously; the communication is one direction at a time.

It is considered to adopt FD in NR. As a first step to incorporate FD into NR systems, FD is implemented on the network side wherein backward compatibility with half-duplex (HD) at the UE side is maintained. That is, the FD capable network side element (e.g. the BS) is able to support communication with UEs having HD or FD capability. In other words, a serving BS being FD capable on at least a given carrier uses the given carrier to serve either HD UEs or FD UEs or mix of HD and FD UEs.

In a FD based system having at least a FD capable BS (while the UEs may be FD or HD capable), the BS has the capability to transmit DL while receiving UL on overlapping resources either to/from the same UE or different UEs. Therefore, the BS may allocate the same or at least overlapping resources in time domain to the UE for UL transmission and/or DL reception. Then, the UE can be allowed to determine whether to transmit in UL or to receive in DL or even both (when being also FD capable) on allocated resources.

Thus, according to examples of embodiments, a communication control mechanism is provided where a FD based flexible and efficient network scheduling mechanism allows the UE to select at least one of the scheduled UL and DL communications on the allocated resources.

By means of this measure, it is possible to enhance LA performance, i.e. ensuring that the allocated resources are utilized in an optimized way, compared to a case where the suggested method is not implemented. For example, it is possible that the UE utilizes allocated resources of DL real-time multimedia data for transmitting UL critical data. Hence, efficiency of resource utilization and fast transmission of e.g. UL critical data is improved.

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is obvious for a person skilled in the art that the embodiments may also be applied to other kinds of communication networks where mobile communication principles are integrated, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station (BS), an gNB, a radio network controller, a core network control element or function, such as a gateway element, or other network elements or functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

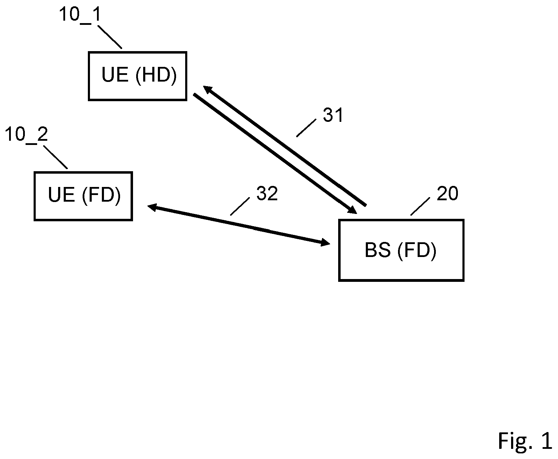

Fig. 1 shows a diagram illustrating an example of a communication network scenario in which a communication control mechanism according to some examples of embodiments in implemented.

Specifically, in Fig. 1, a simplified excerpt of a communication network is illustrated comprising a communication network control element (or function) represented by an access network control element, such as a BS (BS 20), to which one or more communication elements (or functions) 10 representing end points of a communication are connectable (in the example shown in Fig. 1, two UEs 10_1 and 10_1 are depicted). It is assumed that the BS 20 has a FD capability, i.e. can simultaneously transmit and receive data in FD mode, which also applies for UE 10_2 (FD communication is illustrated with doubled arrow 32), while UE 10_1 is only HD capable (illustrated by two arrows 31 in Fig. 1). It is to be noted that a communication network in which examples of embodiments are applicable may comprise of course a plurality of communication network control elements or functions (e.g. a plurality of BS) and more communication elements or functions (UEs) than those shown in Fig. 1. Furthermore, other network elements are involved in a communication control, such as core network elements and the like, which are not shown in Fig. 1 for the sake of simplicity.

As indicated above, according to examples of embodiments, a mechanism is provided which enables the UE (e.g. UE 10_1 or UE 10_2) to be involved in determining whether UL or DL or both way transmission is executed on the allocated resources of a FD carrier/system. That is, upon receiving from the BS a FD based scheduling grant consisting of both UL and DL allocations on the same or overlapping resources, wherein the overlapping is at least in time domain (e.g. in the same TTI), the UE is configured to select/determine whether to transmit UL data or receive DL data (or both, e.g. in case of UE 10_2). Then, the UE is able to interact with the BS accordingly for an improved utilization of the allocated resources.

For example, according to examples of embodiment, the communication network control element or function, such as the BS 20, configures whether the UE has the flexibility of selecting/determining to transmit UL or receive DL or both on allocated resources using an indicated MCS. It is to be noted that the MCS can be the same for UL and DL or different MCSs can be indicated, e.g. according to the configurations at BS.

For example, according to some examples of embodiments, for the configuration to the UE, RRC signaling with explicit configuration is used. According to further examples of embodiments, physical layer control signaling e.g. downlink control information (DCI) in PDCCH together with UL and/or DL grants is used. In this context, either explicit or implicit indication can be used. According to some further examples of embodiments, a mixed RRC and physical layer control signaling is used in a way that the configuration is done over RRC signaling and the activation of such behavior achieved via physical layer control signaling, for example. It is to be noted that according to other examples of embodiments also signaling procedures being different to the above exemplified procedures are usable.

In addition, according to examples of embodiments, in the configuration, it is possible to indicate a priority of UL transmission and DL reception together with the configuration discussed above. This includes also an indication of corresponding conditions to apply for the configured priority enabling the UE to select the UL transmission and/or DL reception. It is to be noted that, according to some examples of embodiments, the BS can also configure a pattern which type (e.g. UL or DL) of transmission is to be prioritized.

Regarding the allocated UL and DL resources, as indicated above, they are at least partly overlapping in the time domain. Regarding the frequency domain, the allocated resources can be fully or partially overlapping or totally different resources. It is to be noted that the allocation can be done in various ways, e.g. by using either dynamic UL/DL grant, or a semi-persistent scheduling (SPS), or a configured grant (CG).

When the BS has completed the configuration and the UE has received the corresponding information, together with a resource allocation for UL and/or DL communication from the BS, the UE is able to determine/select whether to use the allocated resource for UL transmission or DL reception or both.

For example, the determination regarding the usage is based on the UL/DL priority indication received from the BS. Furthermore, the determination considers e.g. communication conditions, such as QoS requirements of UL and DL traffic (e.g. whether buffered UL data is more urgent than DL data), a difference between the real-time measured DL channel condition and the last reported CSI, the time interval after last UL sounding signal has been transmitted etc.

In case the UE determines to transmit UL instead of (or in addition to) receiving DL, e.g. due to more urgent UL data are present, or due to poorer real-time channel condition than reported CSI (which makes it not possible to receive the DL correctly), the UE can indicate to BS in the UL transmission additionally that the DL transmission/communication is not correctly received by the UE (i.e. not received at all or received with error by the UE or partially received). Furthermore, a cause of the incorrect reception can be indicated, if available.

Furthermore, it is also possible that the UE indicates in the UL transmission the latest measured CSI. Alternatively or additionally, a suggestion for another MCS to be used for the DL transmission/communication can be provided, which allows the BS to improve the LA for a next DL transmission/re-transmission.

On the network side, i.e. at the BS, when the configuration of the UE on flexible UL and DL communication as well as the UL and/or DL scheduling grant including the allocated resource is provided, the BS transmits the DL data and listens/receives UL transmission according to the UL and DL grant that the BS has sent to the UE.

In case the BS receives from the UE an (explicit or implicit) indication that the UE is not receiving or has not received correctly a DL transmission (not received or received with error or partially received), the BS can determine to perform at least one of the following actions:
As one action, the BS terminates the DL transmission to the UE in question in case the UE indicates that the DL transmission is not received. Then, the BS schedules a retransmission of the DL data wherein a new LA is executed based on current measured data, e.g. based on the latest CSI report.

An another action, the BS terminates the DL transmission in case the UE indicates that the DL transmission is not received. Then, the BS reallocates the DL resources to other UEs which allows for a better usage of the radio resources.

As still another action, the BS continues the DL transmission. However, it schedules a retransmission of the incorrectly received data to an earlier point of time, e.g. in the next TTI without receiving normal HARQ feedback. This is considered at least in the case if UE indicates that the DL transmission is received with error.

Moreover, as another action, the BS stops transmitting the DL data using the original communication setting, e.g. the original MCS. Then, the BS starts transmitting at least part of the DL data by using other communication settings, such as an MCS being suggested by the UE, or another (newly determined) MCS or the like, on the granted DL resources.

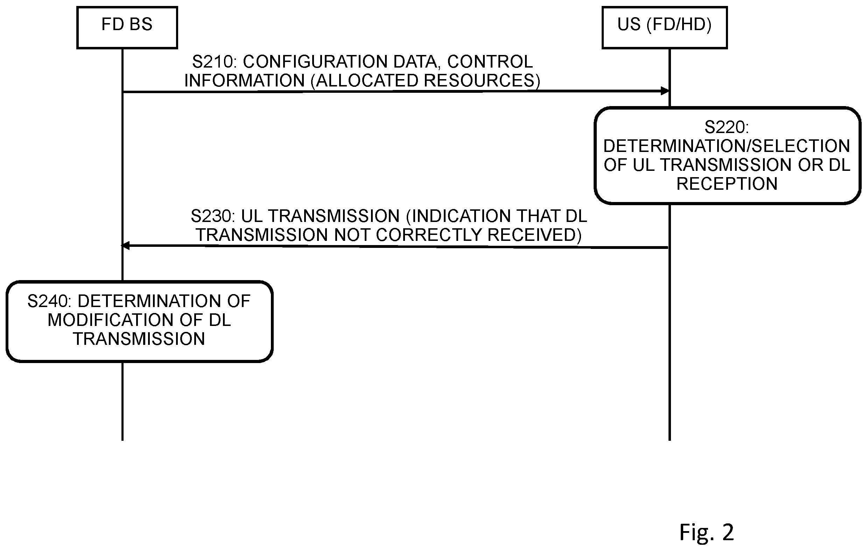

Fig. 2 shows a signaling diagram illustrating a communication control mechanism according to some examples of embodiments in implemented. Specifically, Fig. 2 shows a situation based on the scenario illustrated in Fig. 1 where a FD BS 20 and e.g. UE 10_1 (HD capable) conducts a communication by using the control mechanism indicated above. It is to be noted that the communication control procedure is also applicable for a UE (e.g. UE 10_2) being FD capable.

In S210, in order to enable the UE 10_1 to have the flexibility of determining whether to receive in DL or transmit in UL (or both), the BS 20 determines a configuration for the UE 10_1 and indicates the same to the UE so as to support this feature. In S210, it is assumed that the indication is provided explicitly e.g. in the DCI over PDCCH, together with UL and DL resource allocation.

Alternatively, it is also possible to implicitly indicate this to the HD UE 10_1, for example in case both UL and DL grant information is provided in the same DCI. Furthermore, it is also possible to implicitly indicate this to the HD UE 10_1 by means of providing an overlapping UL and DL resource allocation at least in time domain, even though the UL and DL grant can be transmitted in different DCI, e.g. UL grant is transmitted earlier than DL grant due to e.g. the need of processing time for UL transmission after receiving UL grant.

Alternatively, the configuration of enabling the UE to support the proposed flexible selection of UL and/or DL communication is provided via either dedicated or broadcasted RRC signaling, in which the conditions of prioritizing UL transmission or DL reception can be also configured. For example, the conditions include the DL channel conditions related information (e.g. the difference between the real-time DL channel condition and the last reported CSI), UL sounding signal related information (e.g. the time interval after the last UL sounding reference signal is transmitted), QoS including priority of UL data flows/MAC CE and/or the corresponding DL/UL logical channel or radio bearer that the conditions should be applied for etc. It is to be noted that any combination of physical layer control signaling such as DCI signaling and RRC signaling can be applied as well.

As indicated above, for the corresponding UL and DL allocation, the BS can allocate fully or partially overlapping UL and DL resources or independent non-overlapping UL and DL resources in frequency domain, but at least partially overlapping resources in time domain. It is further possible, according to some examples of embodiments, in order to save signaling overhead of DCI for the UL and DL grants that consist of at least partially overlapping resources in time domain, that the MCS associated with UL and DL allocation can be the same, e.g. on the basis of the MCS for the LA of the prioritized transmission in UL or reception in DL. For instance, in case the BS 20 configures and indicates that the DL reception is prioritized over UL transmission in certain conditions, the MCS associated with both UL and DL communication is selected according to LA of DL communication (or vice versa). Alternatively, the BS 20 only provides DL grant using either DCI (e.g. for dynamic grant) or RRC signaling (e.g. for SPS or CG) and indicates that at least part of DL grant can be used by the UE for UL transmission if the configured conditions are met.

After S210, i.e. when the UE 10_1, for example, is configured to support the flexible selection of the UL or DL communication, upon receiving the UL and DL allocation for the TTls that are at least partially overlapping in time, in S220, the UE 10_1 determines whether to transmit in UL or receive in DL. The UE's determination is implemented, for example, as follows.

For example, the UE determines to transmit the UL data instead of receiving the DL data in case the UL data of at least some of logical channels/radio bearers are prioritized according to the BS configuration and there is UL data of prioritized logical channels/radio bearers/MAC CEs coming to the UE's transmission buffer. By means of this, a fast UL transmission e.g. for URLLC traffic in UL direction is possible without waste of the resources by using for DL reception if there is no UL URLLC data coming. Thus, the latency for UL data transmission can be reduced in a more resource efficient way.

As another example, the UE determines to transmit in UL instead of receiving in DL even if DL is prioritized in certain conditions, when the configured conditions are not met. For instance, the BS configures to prioritize the DL reception if the difference between the measured real-time channel condition and last reported CSI is less than a configured threshold. In case, the UE detects a significant change of DL channel condition, the UE determines to transmit the UL instead of receiving the DL.

As a further example, in case the UE has FD capability (e.g. UE 10_2), the UE can determine to transmit in UL and receive in DL and indicate to the BS in the UL transmission that the DL data are received with error. This early indication of reception error may be possible, for example, in case the UE side is able to estimate the error of the DL reception earlier, e.g. based on DCI received over PDCCH and the measured real-time DL channel condition.

In case the UE determines in S220 to transmit in UL, which is executed in S230, the UE can also indicate in the UL transmission whether the DL reception is correctly performed or not. For example, in case the UL transmission is caused by UL data of higher priority while DL reception is correctly received, there is no need for a retransmission of the DL data or a modification of the DL path. On the other hand, in case the DL commnication is not received correctly, corresponding measures are required.

According to some examples of embodiments, e.g. in case of the HD UE 10_1, the transmission in UL in S230 as such can be considered as the implicit indication of no DL reception or reception with error. On the other hand, in case of a FD UE or in case that transmission of specific UL data is prioritized, it is preferable that an explicit indication of no DL reception or DL reception with error is provided, which is the case in S230 of Fig. 2.

In order to enable the BS 20 to make a faster reaction (e.g. early termination of DL transmission or adjustment of DL transmission) based on the indication from UE, the indication from UE can be conveyed via uplink control information (UCI) that may be transmitted separately before the actual UL data transmission.

When BS receives the UL transmission and also an indication of no DL reception or DL reception with error (either explicitly or implicitly), in S240, different actions are considered to be performed by the BS, such as those described above. For example, the BS 20 selects the different actions on the basis of the indication from the UE, UE's capability (e.g. HD or FD capability), radio resource usage status, the QoS of the DL traffic of the targeted UE's and other UEs.

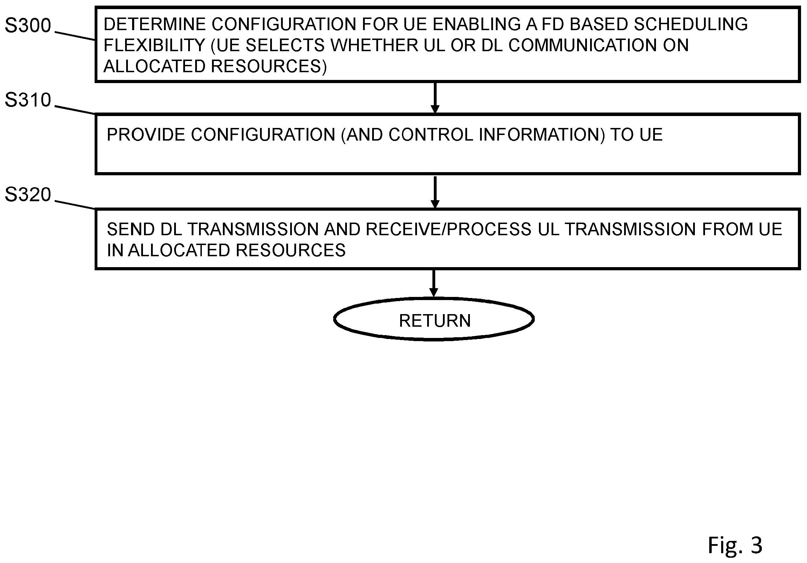

Fig. 3 shows a flow chart of a processing executed by a communication network control element or function according to some examples of embodiments, which conducts a communication control procedure according to examples of embodiments of the disclosure. According to some examples of embodiments, the processing shown in Fig. 3 is conducted by a network element or function like the BS 20 usable for communicating with at least one communication element or function, such as a UE (e.g. UE 10_1, UE10_2 as shown in Fig. 1) by using a full duplex communication mode, wherein the communication element or function is one of a communication end point being capable to communicate with the communication network by a full duplex communication mode and a communication end point being capable to communicate with the communication network by a half duplex communication mode.

In S300, a configuration for a communication element or function (i.e. UE 10_1, 10_2, for example) for communicating in the communication network is determined. The configuration enables a full duplex based scheduling flexibility allowing the communication element or function to select using allocated resources for at least one of transmitting in uplink and receiving in downlink. The allocated resources are at least partially overlapping in time domain.

For example, for the configuration, a priority order for selecting a transmission in uplink or reception in downlink is determined and indicated. In addition, also a condition under which the given priority order applies is indicated.

Furthermore, according to examples of embodiments, as the allocated resources, resources are selected which are fully overlapping in a frequency domain, or partly overlapping in the frequency domain, or completely different (i.e. not-overlapping) in the frequency domain.

According to examples of embodiments, it is possible to use, for allocating the allocated resources, one of a dynamic uplink/downlink grant, a semi-persistent scheduling or a configured grant.

In S310, the configuration is provided (e.g. signaled) to the communication element or function.

It is to be noted that information related to configuration can be provided in the same signaling as the control information e.g. for allocating the allocated resources, or it is possible to use respective different signaling processes for the configuration and the control information.

For example, according to examples of embodiments, for providing the configuration and control information to the communication element or function, at least one of the following can be used: a RRC signaling and a physical layer control (e.g. DCI over PDCCH) signaling. The configuration is indicated by means of an explicit configuration information (e.g. a specific information element) or by an implicit indication (e.g. due to the fact that the configuration includes specific information, as described above) allowing the communication element or function to deduce the configuration.

Moreover, according to examples of embodiments, control information related to a scheduled transmission in downlink to the communication element or function is provided, after scheduling is performed, which can be coupled with a transmission in uplink from the communication element or function, on the allocated resources.

In S320, the scheduled transmission in downlink is sent to the communication element or function. Furthermore, a transmission in uplink from the communication element or function on the allocated resources is received and processed. That is, the BS has the possibility to send and/or receive a communicaiton in DL/UL at least on a part of the allocated resouces.

For example, according to examples of embodiments, when receiving a transmission in uplink from the communication element or function on the allocated resources, an indication whether the communication element or function determines that it is receiving (or has received) a transmission in downlink or not or determines that it is receiving (or has received) the transmission in downlink with error or not (i.e. that is correctly receiving (or has correctly received) the transmission or not) is identified. In this context, it is to be noted that, when assuming a full-duplex BS, which means that the BS simultaneously receives UL while it transmits in DL downlink, in UE's UL transmission, the indication on whether DL reception is successful or not may be based, for example, on an estimation of the UE.

As indicated above, this indication can be given explicitly or implicitly. Then, a modification for the transmission in downlink is determined according to the indication whether the communication element or function has correctly received a transmission in downlink or not.

In addition, according to examples of embodiments, when the communication element or function is not correctly receiving or has not correctly received a transmission in downlink, assisting information is received and processed. For example, the assisting information indicates at least one of a cause why the transmission is not received correctly, a communication condition at the time when the transmission is not received correctly, and a suggestion for a change in a communication setting used for the transmission in downlink. This assisting information is then considered when determining the modification for the transmission in downlink.

In detail, according to examples of embodiments, as the modification for the transmission in downlink, one of the following procedures can be executed.
A) The transmission in downlink to the communication element or function is terminated and a retransmission of data in downlink is scheduled by using new communication settings (e.g. a new LA result based on the latest CSI report).
B) The transmission in downlink to the communication element or function is terminated and the resources are reallocated to another communication connection (for allowing better usage of available resources).
c) The transmission in downlink to the communication element or function is continued and a retransmission of data in downlink is scheduled at an earlier point of time (e.g. without waiting for normal HARQ NACK reception).
d) The transmission in downlink is stopped and a transmission of data in downlink is started by using a changed communication setting, wherein the change in the communication setting can be selected by the BS by considering a suggestion provided by the communication element or function (e.g. a suggested new MCS included in the indication of incorrect reception of previous downlink communication which is applied to the data transmission on the granted or allocated resources in downlink); of course, the suggested by the communication element or function can also be ignored in the selection process.

Furthermore, according to examples of embodiments, the indication whether the communication element or function determines to receive or estimates to correctly receive a transmission in downlink or not is received by means of an uplink control information signaling (which allows earlier reception and processing in comparison to a transmission by using uplink data transmission).

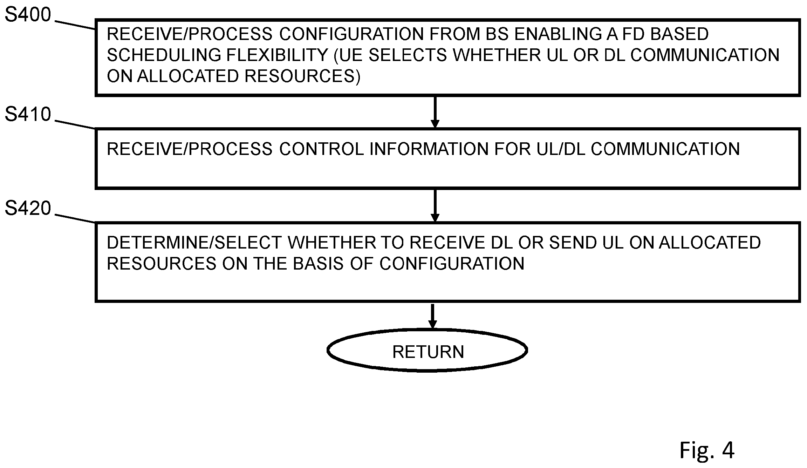

Fig. 4 shows a flow chart of a processing executed by a communication element or function according to some examples of embodiments, which conducts a communication being controlled according to examples of embodiments of the disclosure. According to some examples of embodiments, the processing shown in Fig. 4 is conducted by a communication element or function like UE (e.g. UE 10_1, UE10_2 as shown in Fig. 1) communicating with a communication network control element or function like the BS 20 shown in Fig. 1 by using a full duplex communication mode, wherein the communication element or function is one of a communication end point being capable to communicate with the communication network by a full duplex communication mode and a communication end point being capable to communicate with the communication network by a half duplex communication mode.

In S400, a configuration for communicating in the communication network is received and processed. The configuration enables a full duplex based scheduling flexibility allowing to select using allocated resources for at least one of transmitting in uplink and receiving in downlink, wherein the allocated resources are at least partially overlapping in time domain.

For example, according to examples of embodiments, the allocated resources are fully overlapping in a frequency domain, or partly overlapping in the frequency domain, or completely different (i.e. not-overlapping) in the frequency domain.

According to examples of embodiments, it is possible to use, for allocating the allocated resources, one of a dynamic uplink/downlink grant, a semi-persistent scheduling or a configured grant.

In S410, control information related to a scheduled transmission on allocated resources is received and processed.

For example, according to examples of embodiments, the control information relates to a scheduled transmission in downlink coupled with a transmission in uplink on the allocated resources.

According to examples of embodiments, the configuration and control information are received from the communication network on at least one of a RRC signaling and a physical layer control signaling such as DCI signaling. The configuration is indicated by means of an explicit configuration information (e.g. a specific information element) or by an implicit indication (e.g. due to the fact that the configuration includes specific information, as described above) allowing the communication element or function to deduce the configuration.

It is to be noted that information related to configuration can be received in the same signaling as the control information; that is, S400 and S410 are combined in this regard. Alternatively, respective different signaling processes for the configuration and the control information are used.

In S420, on the basis of the configuration, it is determined whether to transmit data in uplink to the communication network, to receive data in downlink from the communication network, or to transmit and receive data in uplink and downlink, wherein the allocated resources are used.

For example, according to examples of embodiments, a priority order for selecting a transmission in uplink or reception in downlink is determined, wherein also conditions under which the priority order applies are obtained from the configuration (e.g. urgency of UL or DL data, when UL or DL communication conditions are not met, etc.).

Furthermore, according to examples of embodiments, based on the configuration and control information, it is determined whether a transmission in downlink is to be received or not, and in case the transmission in downlink is determined to be received, it is estimated whether the scheduled transmission in downlink from the communication network can be correctly received or not. In case the DL communication is not correctly received, i.e. not received at all or estimated to be received with error, from the communication network, it is determined/selected to send a transmission in uplink to the communication network on the allocated resources.

According to further examples of embodiments, when a transmission in uplink is sent to the communication network on the allocated resources, an indication is included as to whether a transmission in downlink is correctly received or not (i.e. not received or received only with error).

For example, according to examples of embodiments, when a transmission in downlink is not correctly received, assisting information is included in the transmission in uplink to the communication network on the allocated resources. For example, the assisting information indicates at least one of a cause why the transmission is not received correctly, a communication condition at the time when the transmission is not received correctly, and a suggestion for a change in a communication setting used for the transmission in downlink.

Moreover, according to examples of embodiments, in the indication whether a transmission in downlink is correctly received or not, it is also indicated that the transmission in downlink is not received or that the transmission in downlink is received with error.

Furthermore, according to examples of embodiments, the indication whether the transmission in downlink is correctly received or not is sent by means of an uplink control information signaling (which allows earlier reception and processing in comparison to a transmission by using uplink data transmission).

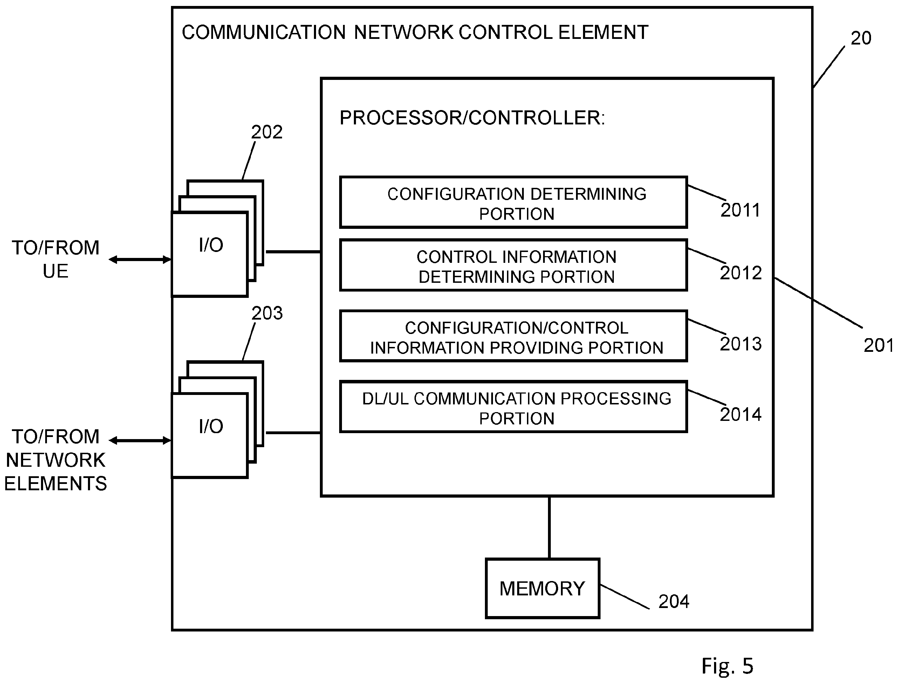

Fig. 5 shows a diagram of a network element or function representing a communication network control element or function 20 according to some examples of embodiments, e.g. a gNB or BS 20 of Fig. 1, of the communication network, or another suitable network element or function of the access network or core network of the communication network, which is configured to conduct a control procedure as described in connection with some of the examples of embodiments. It is to be noted that the communication network control element or function 20, like the BS of Fig. 1, may include further elements or functions besides those described herein below. Furthermore, even though reference is made to a communication network control element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication network control element or function shown in Fig. 5 may include a processing circuitry, a processing function, a control unit or a processor 201, such as a CPU or the like, which is suitable for executing instructions given by programs or the like related to the beam management control procedure. The processor 201 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 202 and 203 denote input/output (I/O) units or functions (interfaces) connected to the processor or processing function 201. The I/O units 202 may be used for communicating with a communication element or function, such as the UE, as described in connection with Figs. 1 and 2, for example. The I/O units 203 may be used for communicating with other network elements, like CN elements. The I/O units 202 and 203 may be a combined unit including communication equipment towards several entities, or may include a distributed structure with a plurality of different interfaces for different entities. Reference sign 204 denotes a memory usable, for example, for storing data and programs to be executed by the processor or processing function 201 and/or as a working storage of the processor or processing function 201. It is to be noted that the memory 204 may be implemented by using one or more memory portions of the same or different type of memory.

The processor or processing function 201 is configured to execute processing related to the above described communication control processing. In particular, the processor or processing circuitry or function 201 includes one or more of the following sub-portions. Sub-portion 2011 is a processing portion which is usable as a portion for determining a configuration. The portion 2011 may be configured to perform processing according to S300 of Fig. 3. Furthermore, the processor or processing circuitry or function 201 may include a sub-portion 2012 usable as a portion for determining control information. In addition, the processor or processing circuitry or function 201 may include a sub-portion 2013 usable as a portion for providing the configuration (and control information) e.g. to a UE. Moreover, the processor or processing circuitry or function 201 may include a sub-portion 2014 usable as a portion for conducting an DL/UL transmission processing. The portion 2014 may be configured to perform a processing according to S320 of Fig. 3.

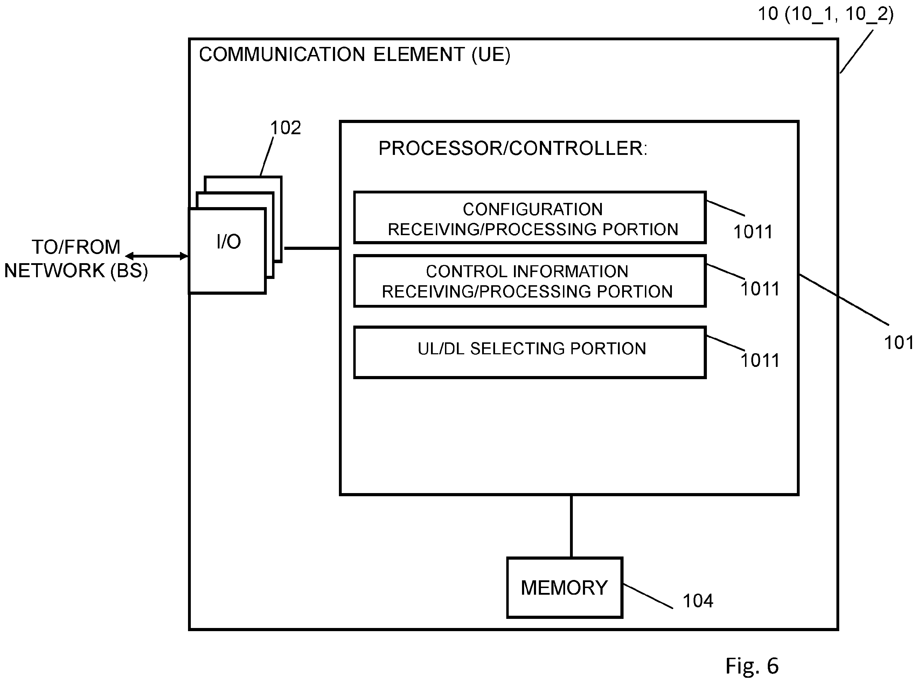

Fig. 6 shows a diagram of a network element or function representing a communication element or function 10 according to some examples of embodiments, e.g. a UE 10_1 or 10_2 of Fig. 1 or 2, which is configured to communicate under a communication control procedure as described in connection with some of the examples of embodiments. It is to be noted that the communication element or function, like the UE 10_1 or 10_2 of Fig. 1 or 2, may include further elements or functions besides those described herein below. Furthermore, even though reference is made to a communication element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication element or function shown in Fig. 6 may include a processing circuitry, a processing function, a control unit or a processor 101, such as a CPU or the like, which is suitable for executing instructions given by programs or the like related to the beam management control procedure. The processor 101 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 102 denotes input/output (I/O) units or functions (interfaces) connected to the processor or processing function 101. The I/O units 102 may be used for communicating with a communication network, such as the BS 20, as described in connection with Fig. 1 or 2, for example. The I/O units 102 may be a combined unit including communication equipment towards several entities, or may include a distributed structure with a plurality of different interfaces for different entities. Reference sign 104 denotes a memory usable, for example, for storing data and programs to be executed by the processor or processing function 101 and/or as a working storage of the processor or processing function 101. It is to be noted that the memory 104 may be implemented by using one or more memory portions of the same or different type of memory.

The processor or processing function 101 is configured to execute processing related to the above described communication control processing. In particular, the processor or processing circuitry or function 101 includes one or more of the following sub-portions. Sub-portion 1011 is a processing portion which is usable as a portion for receiving and processing a configuration. The portion 1011 may be configured to perform processing according to S400 of Fig. 4. Furthermore, the processor or processing circuitry or function 101 may include a sub-portion 1012 usable as a portion for Receiving and processing control information. The portion 1012 may be configured to perform a processing according to S410 of Fig. 4. In addition, the processor or processing circuitry or function 101 may include a sub-portion 1013 usable as a portion for UL/DL selection. The portion 1013 may be configured to perform a processing according to S420 of Fig.4.

By means of examples of embodiments as described above, it is possible to provide a FD based flexible and efficient network scheduling allowing the UE to select at least one of the scheduled UL and DL communications on the allocated resources. That is, the decision as to use the allocated resource for UL transmission or DL reception or both is made by the UE. In other words, the UE is allocated overlapping uplink and downlink resources and decides to use the resources for UL or DL communication based on specified criteria or to use the resources for UL in order to indicate the status of DL communication, e.g. for early termination. Hence, Link Adaptation performance can be enhanced by ensuring that the allocated resources are best utilized. Moreover, LA performance can be improved without increasing overhead.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

According to a further example of embodiments, there is provided, for example, an apparatus for use by a communication network control element or function configured to control a communication in a communication network, the apparatus comprising means configured to determine a configuration for a communication element or function for communicating in the communication network, the configuration enabling a full duplex based scheduling flexibility allowing the communication element or function to select using allocated resources for at least one of transmitting in uplink and receiving in downlink, wherein the allocated resources are at least partially overlapping in time domain, and means configured to provide, to the communication element or function, the configuration.

Furthermore, according to some other examples of embodiments, the above defined apparatus may further comprise means for conducting at least one of the processing defined in the above described methods, for example a method according to that described in connection with Fig 3.

According to a further example of embodiments, there is provided, for example, an apparatus for use by a communication element or function configured to communicate in a communication network, the apparatus comprising means configured to receive and process a configuration for communicating in the communication network, the configuration enabling a full duplex based scheduling flexibility allowing to select using allocated resources for at least one of transmitting in uplink and receiving in downlink, wherein the allocated resources are at least partially overlapping in time domain, means configured to receive and process control information related to a scheduled transmission on allocated resources, and means configured to determine, on the basis of the configuration, whether to transmit data in uplink to the communication network, to receive data downlink from the communication network, or to transmit and receive data in uplink and downlink, wherein the allocated resources are used.

Furthermore, according to some other examples of embodiments, the above defined apparatus may further comprise means for conducting at least one of the processing defined in the above described methods, for example a method according to that described in connection with Fig 4.

According to a further example of embodiments, there is provided, for example, a non-transitory computer readable medium comprising program instructions for causing an apparatus to perform, when conducting a communication control for a communication in a communication network, at least the following: determining a configuration for a communication element or function for communicating in the communication network, the configuration enabling a full duplex based scheduling flexibility allowing the communication element or function to select using allocated resources for at least one of transmitting in uplink and receiving in downlink, wherein the allocated resources are at least partially overlapping in time domain, and providing, to the communication element or function, the configuration.

According to a further example of embodiments, there is provided, for example, a non-transitory computer readable medium comprising program instructions for causing an apparatus to perform, when conducting a communication in a communication network, at least the following: receiving and processing a configuration for communicating in the communication network, the configuration enabling a full duplex based scheduling flexibility allowing to select using allocated resources for at least one of transmitting in uplink and receiving in downlink, wherein the allocated resources are at least partially overlapping in time domain, receiving and processing control information related to a scheduled transmission on allocated resources, and determining, on the basis of the configuration, whether to transmit data in uplink to the communication network, to receive data downlink from the communication network, or to transmit and receive data in uplink and downlink, wherein the allocated resources are used.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

## Claims

1. An apparatus for a communication network control element or function (20) configured to
control a communication in a communication network, the apparatus comprising
at least one processing circuitry, and
at least one memory for storing instructions to be executed by the processing circuitry,
wherein the at least one memory and the instructions are configured to, with the at least one processing circuitry, cause the apparatus to:
determine a configuration for a communication element or function (10) for communicating in the communication network, the configuration enabling a full duplex based scheduling flexibility allowing the communication element or function to select using allocated resources for at least one of transmitting in uplink and receiving in downlink, wherein the allocated resources are at least partially overlapping in time domain, and
provide, to the communication element or function, the configuratior
wherein the communication element or function is a user equipment, UE;
provide control information related to a scheduled transmission in downlink to the communication element or function coupled with a transmission in uplink from the communication element or function on the allocated resources,
send the scheduled transmission in downlink to the communication element or function and to receive and process a transmission in uplink from the communication element or function on the allocated resources,
use, for allocating the allocated resources, one of dynamic uplink/downlink grant, a semi-persistent scheduling or a configured grant,
use, for providing the configuration and control information to the communication element or function, a radio resource control, RRC, signaling and a physical layer control, DCI over PDCCH, signaling,
select, as the allocated resources, resources being different in the frequency domain,
**characterised in**:
when receiving a transmission in uplink from the communication element or function on the allocated resources, identify an indication whether the communication element or function is correctly receiving or has correctly received a transmission in downlink or not, and
determine a modification for the transmission in downlink according to the indication whether the communication element or function is correctly receiving or has correctly received a transmission in downlink or not.

2. The apparatus according to claim 1, wherein the at least one memory and the instructions are further configured to, with the at least one processing circuitry, cause the apparatus at least:
to indicate, in the configuration, a priority order for selecting a transmission in uplink or reception in downlink, and a condition under which the priority order applies.

3. The apparatus according to any of claims 1 to 2,
wherein the configuration is indicated by means of an explicit configuration information or an implicit indication allowing the communication element or function to deduce the configuration.

4. A method performed by a communication network control element or function (20) configured to control a communication in a communication network, the method comprising
determining (S300) a configuration for a communication element or function (10) for communicating in the communication network, the configuration enabling a full duplex based scheduling flexibility allowing the communication element or function to select using allocated resources for at least one of transmitting in uplink and receiving in downlink, wherein the allocated resources are at least partially overlapping in time domain, and
providing (S310), to the communication element or function, the configuratior wherein the communication element or function is a user equipment, UE;
providing control information related to a scheduled transmission in downlink to the communication element or function coupled with a transmission in uplink from the communication element or function on the allocated resources,
sending (S320) the scheduled transmission in downlink to the communication element or function and receiving and processing a transmission in uplink from the communication element or function on the allocated resources,
using, for allocating the allocated resources, one of dynamic uplink/downlink grant, a semi-persistent scheduling or a configured grant,
using for providing the configuration and control information to the communication element or function, a radio resource control, RRC, signaling and a physical layer control, DCI over PDCCH, signaling, selecting, as the allocated resources, resources being different in the frequency domain,
**characterised in**:
when receiving a transmission in uplink from the communication element or function on the allocated resources, identifying an indication whether the communication element or function is correctly receiving or has correctly received a transmission in downlink or not, and
determining a modification for the transmission in downlink according to the indication whether the communication element or function is correctly receiving or has correctly received a transmission in downlink or not.

5. An apparatus for a communication element or function (10) configured to communicate
in a communication network, wherein the communication element or function is a user equipment, UE, the apparatus comprising
at least one processing circuitry, and
at least one memory for storing instructions to be executed by the processing circuitry,
wherein the at least one memory and the instructions are configured to, with the at least one processing circuitry, cause the apparatus to:
receive and process a configuration for communicating in the communication network, the configuration enabling a full duplex based scheduling flexibility allowing to select using allocated resources for at least one of transmitting in uplink and receiving in downlink, wherein the allocated resources are at least partially overlapping in time domain,
receive and process control information related to a scheduled transmission on allocated resources, and
determine, on the basis of the configuration, whether to transmit data in uplink to the communication network, to receive data downlink from the communication network, or to transmit and receive data in uplink and downlink, wherein the allocated resources are used,
receive the configuration and control information from the communication network on a radio resource control, RRC, signaling and a physical layer control, DCI over PDCCH, signaling,
wherein the allocated resources are allocated using one of dynamic uplink/downlink grant, a semi-persistent scheduling or a configured grant,
wherein the allocated resources are different in the frequency domain, **characterised in**:
include in a transmission in uplink to the communication network on the allocated resources, when a transmission in downlink is not correctly received, assisting information indicating at least one of a cause why the transmission is not received correctly, a communication condition at the time when the transmission is not received correctly, and a suggestion for a change in a communication setting used for the transmission in downlink.

6. The apparatus according to claim 5, wherein the control information relates a scheduled transmission in downlink coupled with a transmission in uplink on the allocated resources.

7. The apparatus according to any of claims 5 to 6, wherein the at least one memory and the instructions are further configured to, with the at least one processing circuitry, cause the apparatus at least:
to determine, from the configuration, a priority order for selecting a transmission in uplink or a reception in downlink, and a condition under which the priority order applies.

8. The apparatus according to any of claims 5 to 7, wherein the at least one memory and the instructions are further configured to, with the at least one processing circuitry, cause the apparatus at least:
to determine whether the scheduled transmission in downlink from the communication network is received or not and
to estimate, in case the transmission in downlink is determined to be received, whether the scheduled transmission in downlink from the communication network can be correctly received or not and
to determine, in case the transmission in downlink is determined not to be received or estimated not to be received correctly, to send a transmission in uplink to the communication network on the allocated resources.

9. The apparatus according to any of claims 5 to 8 , the configuration is indicated by means of an explicit configuration information or an implicit indication allowing to deduce the configuration.

## Patentansprüche

1. Vorrichtung für ein Steuerelement oder eine Steuerfunktion (20) eines Kommunikationsnetzes, die konfiguriert ist, um eine Kommunikation in einem Kommunikationsnetz zu steuern, wobei die Vorrichtung Folgendes umfasst
mindestens eine Verarbeitungsschaltung, und
mindestens einen Speicher zum Speichern von Anweisungen, die durch die Verarbeitungsschaltung auszuführen sind,
wobei der mindestens eine Speicher und die Anweisungen dafür konfiguriert sind, zusammen mit der mindestens einen Verarbeitungsschaltung die Vorrichtung zu veranlassen zum:
Bestimmen einer Konfiguration für ein Kommunikationselement oder eine Kommunikationsfunktion (10) zum Kommunizieren in dem Kommunikationsnetz, wobei die Konfiguration eine auf Vollduplex basierende Planungsflexibilität ermöglicht, die es dem Kommunikationselement oder der Kommunikationsfunktion erlaubt, das Verwenden zugewiesener Ressourcen für mindestens eines von Übertragen im Uplink und Empfangen im Downlink auszuwählen, wobei sich die zugewiesenen Ressourcen zumindest teilweise im Zeitbereich überlappen, und
Bereitstellen der Konfiguration an das Kommunikationselement oder die Kommunikationsfunktion, wobei das Kommunikationselement oder die Kommunikationsfunktion ein Endgerät, UE, ist;
Bereitstellen von Steuerinformationen in Bezug auf eine geplante Übertragung im Downlink an das Kommunikationselement oder die Kommunikationsfunktion, die mit einer Übertragung im Uplink von dem Kommunikationselement oder der Kommunikationsfunktion auf den zugewiesenen Ressourcen gekoppelt ist,
Senden der geplanten Übertragung im Downlink an das Kommunikationselement oder die Kommunikationsfunktion und Empfangen und Verarbeiten einer Übertragung im Uplink von dem Kommunikationselement oder der Kommunikationsfunktion auf den zugewiesenen Ressourcen,
Verwenden, für die Zuweisung der zugewiesenen Ressourcen, einer dynamischen Uplink/Downlink-Bewilligung, einer semipersistenten Planung oder einer konfigurierten Bewilligung,
Verwenden, zur Bereitstellung der Konfigurations- und Steuerinformationen an das Kommunikationselement oder die Kommunikationsfunktion, einer RRC-Signalisierung (Radio Resource Control) und einer DCI-über-PDCCH-Signalisierung mit Steuerung auf der physikalischen Schicht (Physical Layer Control),
Auswählen von Ressourcen, die sich im Frequenzbereich unterscheiden, als die zugewiesenen Ressourcen, **gekennzeichnet durch**:
Identifizieren, beim Empfang einer Übertragung im Uplink von dem Kommunikationselement oder der Kommunikationsfunktion auf den zugewiesenen Ressourcen, einer Angabe, ob das Kommunikationselement oder die Kommunikationsfunktion eine Übertragung im Downlink korrekt empfängt oder korrekt empfangen hat oder nicht, und
Bestimmen einer Modifikation für die Übertragung im Downlink entsprechend der Angabe, ob das Kommunikationselement oder die Kommunikationsfunktion eine Übertragung im Downlink korrekt empfängt oder korrekt empfangen hat oder nicht.

2. Vorrichtung nach Anspruch 1, wobei der mindestens eine Speicher und die Anweisungen ferner so konfiguriert sind, dass sie zusammen mit der mindestens einen Verarbeitungsschaltung die Vorrichtung veranlassen, mindestens Folgendes durchzuführen:
Angeben, in der Konfiguration, einer Prioritätsreihenfolge für die Auswahl einer Übertragung im Uplink oder eines Empfangs im Downlink sowie einer Bedingung, unter der die Prioritätsreihenfolge gilt.

3. Vorrichtung nach einem der Ansprüche 1 bis 2,
wobei die Konfiguration mittels einer expliziten Konfigurationsinformation oder einer impliziten Angabe, die dem Kommunikationselement oder der Kommunikationsfunktion einen Rückschluss auf die Konfiguration ermöglicht, angegeben wird.

4. Verfahren, das von einem Steuerelement oder einer Steuerfunktion (20) eines Kommunikationsnetzes durchgeführt wird, das bzw. die zur Steuerung einer Kommunikation in einem Kommunikationsnetz konfiguriert ist, wobei das Verfahren Folgendes umfasst
Bestimmen (S300) einer Konfiguration für ein Kommunikationselement oder eine Kommunikationsfunktion (10) zum Kommunizieren in dem Kommunikationsnetz, wobei die Konfiguration eine auf Vollduplex basierende Planungsflexibilität ermöglicht, die es dem Kommunikationselement oder der Kommunikationsfunktion erlaubt, das Verwenden zugewiesener Ressourcen für mindestens eines von Übertragen im Uplink und Empfangen im Downlink auszuwählen, wobei sich die zugewiesenen Ressourcen zumindest teilweise im Zeitbereich überlappen, und
Bereitstellen (S310) der Konfiguration an das Kommunikationselement oder die Kommunikationsfunktion, wobei das Kommunikationselement oder die Kommunikationsfunktion ein Endgerät, UE, ist;
Bereitstellen von Steuerinformationen in Bezug auf eine geplante Übertragung im Downlink an das Kommunikationselement oder die Kommunikationsfunktion, die mit einer Übertragung im Uplink von dem Kommunikationselement oder der Kommunikationsfunktion auf den zugewiesenen Ressourcen gekoppelt ist,
Senden (S320) der geplanten Übertragung im Downlink an das Kommunikationselement oder die Kommunikationsfunktion und Empfangen und Verarbeiten einer Übertragung im Uplink von dem Kommunikationselement oder der Kommunikationsfunktion auf den zugewiesenen Ressourcen,
Verwenden, für die Zuweisung der zugewiesenen Ressourcen, einer dynamischen Uplink/Downlink-Bewilligung, einer semipersistente Planung oder einer konfigurierten Bewilligung,
Verwenden, zur Bereitstellung der Konfigurations- und Steuerinformationen an das Kommunikationselement oder die Kommunikationsfunktion, einer RRC-Signalisierung (Radio Resource Control) und einer DCI-über-PDCCH-Signalisierung mit Steuerung auf der physikalischen Schicht (Physical Layer Control),
Auswählen von Ressourcen, die sich im Frequenzbereich unterscheiden, als die zugewiesenen Ressourcen,
**gekennzeichnet durch**:
Identifizieren, beim Empfang einer Übertragung im Uplink von dem Kommunikationselement oder der Kommunikationsfunktion auf den zugewiesenen Ressourcen, einer Angabe, ob das Kommunikationselement oder die Kommunikationsfunktion eine Übertragung im Downlink korrekt empfängt oder korrekt empfangen hat oder nicht, und
Bestimmen einer Modifikation für die Übertragung im Downlink entsprechend der Angabe, ob das Kommunikationselement oder die Kommunikationsfunktion eine Übertragung im Downlink korrekt empfängt oder korrekt empfangen hat oder nicht.

5. Vorrichtung für ein Kommunikationselement oder eine Kommunikationsfunktion (10), die konfiguriert ist, um in einem Kommunikationsnetzwerk zu kommunizieren, wobei das Kommunikationselement oder die Kommunikationsfunktion ein Endgerät, UE, ist, wobei die Vorrichtung Folgendes umfasst
mindestens eine Verarbeitungsschaltung, und
mindestens einen Speicher zum Speichern von Anweisungen, die durch die Verarbeitungsschaltung auszuführen sind,
wobei der mindestens eine Speicher und die Anweisungen dafür konfiguriert sind, zusammen mit der mindestens einen Verarbeitungsschaltung die Vorrichtung zu veranlassen zum:
Empfangen und Verarbeiten einer Konfiguration zum Kommunizieren in einem Kommunikationsnetz, wobei die Konfiguration eine auf Vollduplex basierende Planungsflexibilität ermöglicht, die es erlaubt, das Verwenden zugewiesener Ressourcen für mindestens eines von Übertragen im Uplink und Empfangen im Downlink auszuwählen, wobei sich die zugewiesenen Ressourcen zumindest teilweise im Zeitbereich überlappen,
Empfangen und Verarbeiten von Steuerinformationen in Bezug auf eine geplante Übertragung auf zugewiesenen Ressourcen, und
Bestimmen, auf der Grundlage der Konfiguration, ob Daten im Uplink zum Kommunikationsnetz zu übertragen sind, Daten im Downlink vom Kommunikationsnetz zu empfangen sind oder Daten im Uplink und im Downlink zu übertragen und zu empfangen sind, wobei die zugewiesenen Ressourcen verwendet werden,
Empfangen der Konfigurations- und Steuerinformationen von dem Kommunikationsnetz über eine RRC-Signalisierung (Radio Resource Control) und eine DCI-über-PDCCH-Signalisierung mit Steuerung auf der physikalischen Schicht (Physical Layer Control),
wobei die zugewiesenen Ressourcen unter Verwendung einer dynamischen Uplink/Downlink-Bewilligung, einer semipersistenten Planung oder einer konfigurierten Bewilligung zugewiesen werden,
wobei sich die zugewiesenen Ressourcen im Frequenzbereich unterscheiden, **gekennzeichnet durch**:
Aufnehmen von Hilfsinformationen in eine Übertragung im Uplink an das Kommunikationsnetz auf den zugewiesenen Ressourcen, wenn eine Übertragung im Downlink nicht korrekt empfangen wird, wobei die Hilfsinformationen mindestens eine Ursache, warum die Übertragung nicht korrekt empfangen wird, einen Kommunikationszustand zu dem Zeitpunkt, an dem die Übertragung nicht korrekt empfangen wird, oder einen Vorschlag für eine Änderung einer Kommunikationseinstellung, die für die Übertragung im Downlink verwendet wird, angeben.

6. Vorrichtung nach Anspruch 5, wobei sich die Steuerinformationen auf eine geplante Übertragung im Downlink beziehen, die mit einer Übertragung im Uplink auf den zugewiesenen Ressourcen gekoppelt ist.

7. Vorrichtung nach einem der Ansprüche 5 bis 6, wobei der mindestens eine Speicher und die Anweisungen ferner so konfiguriert sind, dass sie zusammen mit der mindestens einen Verarbeitungsschaltung die Vorrichtung veranlassen, mindestens Folgendes durchzuführen:
Bestimmen, anhand der Konfiguration, einer Prioritätsreihenfolge für die Auswahl einer Übertragung im Uplink oder eines Empfangs im Downlink sowie einer Bedingung, unter der die Prioritätsreihenfolge gilt.

8. Vorrichtung nach einem der Ansprüche 5 bis 7,wobei der mindestens eine Speicher und die Anweisungen ferner so konfiguriert sind, dass sie zusammen mit der mindestens einen Verarbeitungsschaltung die Vorrichtung veranlassen, mindestens Folgendes durchzuführen:
Bestimmen, ob die geplante Übertragung im Downlink von dem Kommunikationsnetz empfangen wird oder nicht, und
für den Fall, dass festgestellt wird, dass die Übertragung im Downlink empfangen wird, Abschätzen, ob die geplante Übertragung im Downlink von dem Kommunikationsnetz korrekt empfangen werden kann oder nicht, und
für den Fall, dass festgestellt wird, dass die Übertragung im Downlink nicht oder voraussichtlich nicht korrekt empfangen wird, Bestimmen, dass eine Übertragung im Uplink auf den zugewiesenen Ressourcen an das Kommunikationsnetz gesendet wird.

9. Vorrichtung nach einem der Ansprüche 5 bis 8, wobei die Konfiguration durch eine explizite Konfigurationsinformation oder eine implizite Angabe, die einen Rückschluss auf die Konfiguration zulässt, angegeben wird.

## Revendications

1. Appareil pour un élément ou une fonction de commande de réseau de communication (20) configuré(e) pour commander une communication dans un réseau de communication, l'appareil comprenant
au moins une circuiterie de traitement, et
au moins une mémoire pour stocker des instructions à exécuter par la circuiterie de traitement,
dans lequel la au moins une mémoire et les instructions sont configurées pour, avec la au moins une circuiterie de traitement, amener l'appareil à :
déterminer une configuration pour un élément ou une fonction de communication (10) afin de communiquer dans le réseau de communication, la configuration activant un duplex intégral sur la base d'une flexibilité de programmation permettant à l'élément ou à la fonction de communication de sélectionner l'utilisation de ressources allouées pour au moins l'une parmi une transmission en liaison montante et une réception en liaison descendante, dans lequel les ressources allouées se chevauchent au moins partiellement dans le domaine temporel, et
fournir, à l'élément ou à la fonction de communication, la configuration dans lequel l'élément ou la fonction de communication est un équipement utilisateur, UE (*user equipment*);
fournir une information de commande relative à une transmission programmée en liaison descendante à l'élément ou à la fonction de communication couplée avec une transmission en liaison montante depuis l'élément ou la fonction de communication sur les ressources allouées,
envoyer la transmission programmée en liaison descendante à l'élément ou à la fonction de communication et recevoir et traiter une transmission en liaison montante depuis l'élément ou la fonction de communication sur les ressources allouées,
utiliser, pour allouer les ressources allouées, l'une parmi une autorisation de liaison montante/liaison descendante dynamique, une programmation semi persistante ou une autorisation configurée,
utiliser, pour fournir l'information de configuration et de commande à l'élément ou à la fonction de communication, un signalement de commande de ressource radio, RRC (*radio resource control*)*,* et un signalement de commande de couche physique, DCI par-dessus PDCCH,
sélectionner, en tant que ressources allouées, des ressources qui sont différentes dans le domaine fréquentiel, **caractérisé en ce que** :
lorsqu'il y a réception d'une transmission en liaison montante depuis l'élément ou la fonction de communication sur les ressources allouées, identifier une indication indiquant si oui ou non l'élément ou la fonction de communication reçoit correctement ou a correctement reçu une transmission en liaison descendante, et
déterminer une modification pour la transmission en liaison descendante en fonction de l'indication indiquant si oui ou non l'élément ou la fonction de communication reçoit correctement ou a correctement reçu une transmission en liaison descendante.

2. Appareil selon la revendication 1, dans lequel la au moins une mémoire et les instructions sont en outre configurées pour, avec la au moins une circuiterie de traitement, amener l'appareil au moins :
à indiquer, dans la configuration, un ordre de priorité pour sélectionner une transmission en liaison montante ou une réception en liaison descendante, et une condition sous laquelle l'ordre de priorité s'applique.

3. Appareil selon l'une quelconque des revendications 1 à 2,
dans lequel la configuration est indiquée au moyen d'une information de configuration explicite ou d'une indication implicite permettant à l'élément ou à la fonction de communication de déduire la configuration.

4. Procédé réalisé par un élément ou une fonction de commande de réseau de communication (20) configuré(e) pour commander une communication dans un réseau de communication, le procédé comprenant
la détermination (S300) d'une configuration pour un élément ou une fonction de communication (10) afin de communiquer dans le réseau de communication, la configuration activant un duplex intégral sur la base d'une flexibilité de programmation permettant à l'élément ou à la fonction de communication de sélectionner l'utilisation de ressources allouées pour au moins l'une parmi une transmission en liaison montante et une réception en liaison descendante, dans lequel les ressources allouées se chevauchent au moins partiellement dans le domaine temporel, et
la fourniture (S310), à l'élément ou à la fonction de communication, de la configuration dans lequel l'élément ou la fonction de communication est un équipement utilisateur, UE;
la fourniture d'une information de commande relative à une transmission programmée en liaison descendante à l'élément ou à la fonction de communication couplée avec une transmission en liaison montante depuis l'élément ou la fonction de communication sur les ressources allouées,
l'envoi (S320) de la transmission programmée en liaison descendante à l'élément ou à la fonction de communication et la réception et le traitement d'une transmission en liaison montante depuis l'élément ou la fonction de communication sur les ressources allouées,
l'utilisation, pour allouer les ressources allouées, de l'une parmi une autorisation de liaison montante/liaison descendante dynamique, une programmation semi persistante ou une autorisation configurée,
l'utilisation pour fournir l'information de configuration et de commande à l'élément ou à la fonction de communication, d'un signalement de commande de ressource radio, RRC, et d'un signalement de commande de couche physique, DCI par-dessus PDCCH,
la sélection, en tant que ressources allouées, de ressources qui sont différentes dans le domaine fréquentiel, **caractérisé en ce que** :
lorsqu'il y a réception d'une transmission en liaison montante depuis l'élément ou la fonction de communication sur les ressources allouées, identifier une indication indiquant si oui ou non l'élément ou la fonction de communication reçoit correctement ou a correctement reçu une transmission en liaison descendante, et
déterminer une modification pour la transmission en liaison descendante en fonction de l'indication indiquant si oui ou non l'élément ou la fonction de communication reçoit correctement ou a correctement reçu une transmission en liaison descendante.

5. Appareil pour un élément ou une fonction de communication (10) configuré(e) pour communiquer dans un réseau de communication, dans lequel l'élément ou la fonction de communication est un équipement utilisateur, UE, l'appareil comprenant
au moins une circuiterie de traitement, et
au moins une mémoire pour stocker des instructions à exécuter par la circuiterie de traitement,
dans lequel la au moins une mémoire et les instructions sont configurées pour, avec la au moins une circuiterie de traitement, amener l'appareil à :
recevoir et traiter une configuration pour communiquer dans le réseau de communication, la configuration activant un duplex intégral sur la base d'une flexibilité de programmation permettant de sélectionner l'utilisation de ressources allouées pour au moins l'une parmi une transmission en liaison montante et une réception en liaison descendante, dans lequel les ressources allouées se chevauchent au moins partiellement dans le domaine temporel,
recevoir et traiter une information de commande relative à une transmission programmée sur des ressources allouées, et
déterminer, sur la base de la configuration, de soit transmettre une donnée en liaison montante au réseau de communication, soit recevoir une donnée en liaison descendante depuis le réseau de communication, soit transmettre et recevoir une donnée en liaison montante et en liaison descendante, dans lequel les ressources allouées sont utilisées,
recevoir l'information de configuration et de commande depuis le réseau de communication sur un signalement de commande de ressource radio, RRC, et un signalement de commande de couche physique, DCI par-dessus PDCCH,
dans lequel les ressources allouées sont allouées en utilisant l'une parmi une autorisation de liaison montante/liaison descendante dynamique, une programmation semi persistante ou une autorisation configurée,
dans lequel les ressources allouées sont différentes dans le domaine fréquentiel, **caractérisé en ce que** :
inclure dans une transmission en liaison montante vers le réseau de communication sur les ressources allouées, lorsqu'une transmission en liaison descendante n'est pas correctement reçue, une information d'assistance indiquant au moins l'une parmi une raison pour laquelle la transmission n'est pas reçue correctement, une condition de communication au moment où la transmission n'est pas reçue correctement et une suggestion pour une modification d'un réglage de communication utilisé pour la transmission en liaison descendante.

6. Appareil selon la revendication 5, dans lequel l'information de commande est relative à une transmission programmée en liaison descendante couplée avec une transmission en liaison montante sur les ressources allouées.

7. Appareil selon l'une quelconque des revendications 5 et 6, dans lequel la au moins une mémoire et les instructions sont en outre configurées pour, avec la au moins une circuiterie de traitement, amener l'appareil au moins :
à déterminer, à partir de la configuration, un ordre de priorité pour sélectionner une transmission en liaison montante ou une réception en liaison descendante, et une condition sous laquelle l'ordre de priorité s'applique.

8. Appareil selon l'une quelconque des revendications 5 à 7, dans lequel la au moins une mémoire et les instructions sont en outre configurées pour, avec la au moins une circuiterie de traitement, amener l'appareil au moins :
à déterminer si la transmission programmée en liaison descendante depuis le réseau de communication est reçue ou non et
à estimer, dans le cas où il est déterminé que la transmission en liaison descendante est reçue, si la transmission programmée en liaison descendante depuis le réseau de communication peut être reçue correctement ou non et
à déterminer, dans le cas il est déterminé que la transmission en liaison descendante n'est pas reçue ou estimé ne pas être reçue correctement, d'envoyer une transmission en liaison montante au réseau de communication sur les ressources allouées.

9. Appareil selon l'une quelconque des revendications 5 à 8, la configuration est indiquée au moyen d'une information de configuration explicite ou d'une indication implicite permettant de déduire la configuration.
